# EUROPÄISCHE PATENTSCHRIFT

(11) **EP 1 125 165 B1**
(45) Veröffentlichungstag und Bekanntmachung des Hinweises auf die Patenterteilung: **19.01.2005**
(21) Anmeldenummer: 99950778.3
(22) Anmeldetag: 26.10.1999
(51) Int. Cl.: G03B 37/00, G03B 37/04

(54) **INTERAKTIVE FILMWIEDERGABE**
INTERACTIVE FILM REPRODUCTION
PROJECTION DE FILM INTERACTIVE

(30) Priorität: 26.10.1998 DE 19849269
(43) Veröffentlichungstag der Anmeldung: 22.08.2001
(73) Patentinhaber: Zentrum für Kunst und Medientechnologie Karlsruhe, 76135 Karlsruhe (DE)
(72) Erfinder: SHAW, Jeffrey, D-76229 Karlsruhe (DE)
(74) Vertreter: Lasch, Hartmut Dipl.-Ing.
(86) Internationale Anmeldenummer: PCT/EP1999/008078
(87) Internationale Veröffentlichungsnummer: WO 2000/025177

(56) Entgegenhaltungen:
- US-A- 3 942 884
- US-A- 4 868 682
- US-A- 5 601 353

## Beschreibung

Es ist bereits häufiger der Vorschlag gemacht worden, eine interaktive Film- oder Programmwiedergabe den Benutzern bereitzustellen. So gibt es beispielsweise den Vorschlag, daß ein Film ein gutes oder ein böses Ende haben kann und daß im Kino per Mehrheitsentscheidung der Kinobesucher der Filminhalt bestimmt wird, so daß alle Kinobesucher entweder das böse oder das gute Ende erleben.

Ferner ist auch bekannt, daß von einem Ereignis, z.B. einem Autorennen, mit vielen verschiedenen Kameras Aufnahmen gemacht werden, z.B. von Kameras außerhalb der Strecke und von Kameras, die in den Cockpits der jeweiligen Rennfahrer angeordnet sind. Die jeweiligen Kamerabilder werden gleichzeitig an die Fernsehempfänger übertragen und der Betrachter kann unter der Vielzahl von angebotenen Kameraeinstellungen diejenigen auswählen, welche er derzeit bevorzugt.

Schließlich ist auch schon vorgeschlagen worden, daß in einem 3D-Kino die Plattform, auf der der Betrachter steht oder sitzt, beweglich ist und die Bewegung durch den wiedergegebenen Filminhalt gesteuert wird.

Ferner wurde bereits vom Zentrum für Kunst und Medientechnalogie Karlsruhe (ZKM) vorgeschlagen, in einer aufblasbaren Halbkugel, in der ein 3D-Projektionssystem installiert ist, das projizierte Bild an jede beliebige Stelle der Innenseite der Halbkugel zu verschieben. Die Position des Bildes ist hierbei an die Kopfbewegung eines Besuchers stalliert ist, das projizierte Bild an jede beliebige Stelle der Innenseite der Halbkugel zu verschieben. Die Position des Bildes ist hierbei an die Kopfbewegung eines Besuchers geknüpft und folgt seiner Blickrichtung. Während also beispielsweise beim Kino oder der Fensehbetrachtung die Bildwiedergabe immer auf einen bestimmten einzigen Ort, nämlich einen Kinoleinwandausschnitt oder Femsehbildschirm beschränkt ist, wird bei der vorbeschriebenen Möglichkeit der 3D-Projektion innerhalb der Halbkugel ein Bild an die Stelle verschoben, auf die der Betrachter derzeit blickt.

Es ist ferner bekannt, daß ein vorbeschriebenes 3D-Projektionssystem innerhalb einer Halbkugel auch zu einem virtuellen Spaziergang durch eine rekonstruierte Landschaft verwendet werden kann. Durch das Auswählen (Anklicken) von bestimmten Bildeinheiten kann der Betrachter selbst seinen eigenen "Spaziergang" bestimmen, auch wenn er selbst hierbei sich nicht bewegt, sondern immer an der gleichen Stelle verharrt.

Die US-A-5 601 353 zeigt ein Verfahren, bei dem ein ausgewählter Ausschnitt eines Films auf eine feststehende Leinwand projiziert wird, wobei sich die Position des dargestellten Filmfensters auf der Leinwand nicht ändert.

Es ist Aufgabe der vorliegenden Erfindung, eine Möglichkeit für eine interaktive Filmwahmehmung bereitzustellen, welche kostengünstig, attraktiv ist und bei der der Filmbetrachter bei der Filmwiedergabe bevorzugt auch gleichzeitig Regisseur und Kameramann ist.

Diese Aufgabe wird durch ein Verfahren nach Anspruch 1 und eine Vorrichtung nach Anspruch 23 gelöst. Vorteilhafte Weiterbildungen sind in den Unteransprüchen beschrieben.

Die Erfindung beruht auf folgender Überlegung: Der Mensch befindet sich in einer dreidimensionalen Umgebung und nimmt in der Realität stets zumindest teilweise auch die Dinge wahr, welche außerhalb seines Gesichtsfeldes liegen oder von diesem weniger scharf erfaßt werden. Ein einfaches Beispiel sei hierfür ein Autofahrer, welcher mit dem Blick nach vorne gerichtet auf der Straße fährt. Betätigt der nachfolgende Fahrer seine Hupe, so hört dies der vorausfahrende Autofahrer - er nimmt also auch wahr, was hinter ihm außerhalb seines Gesichtsfelds liegt - und richtet unmittelbar hiernach auch seinen visuellen Sinn (per Blick auf den Rückspiegel) auf das, was hinter ihm vorgeht, um entsprechende Konsequenzen hieraus zu ziehen. So wie der Blick in einen Rückspiegel auch nur ein kleines Fenster auf das wirft, was hinter einem Autofahrer passiert, wobei der Rückspiegelbetrachter nicht erkennen kann, was sich außerhalb der Spiegelfläche abspielt, sieht die Erfindung vor, daß nur ein Filmausschnitt - auch Fenster genannt - des gesamten Films zu sehen ist, während alle anderen Teile des Films außerhalb des Fensters nicht wiedergegeben werden bzw. abgedunkelt und damit kaum oder gar nicht sichtbar sind. Durch die Bewegung des Fensters hat jedoch der Benutzer die Möglichkeit, alle Teile des Films zu betrachten, jedoch nicht zeitgleich. Das "Sichtfenster", also der sichtbare Filmausschnitt hat beispielsweise ein Längen-Seitenverhältnis von 4 zu 3 oder 16 zu 9, kann aber auch jede andere Form annehmen.

Im Kino wie auch im Fernsehen und in allen bekannten Formen der Wiedergabe von bewegten Bildem wird dem Betrachter immer nur ein enger Kameraausschnitt (unabhängig davon, ob die Kamera feststeht oder sich bewegt) angeliefert, wobei der Kameraausschnitt regelmäßig so breit ist, daß er weitestgehend vom Gesichtsfeld und damit dem Aufnahmevermögen eines Menschen erfaßt werden kann. Verglichen mit der dreidimensionalen Wahrnehmung des Menschen in seiner Umgebung ist die übliche Film- und Femsehwiedergabe auf eine einzige Dimension ausgerichtet. Auch wenn dem Benutzer verschiedene Kamerapositionen zur Auswahl angeboten werden, so bedeutet dies nur eine Vervielfachung der Eindimensionalität ohne jedoch für eine realitätsnahe dreidimensionale Wahrnehmung zu sorgen.

Schließlich liegt der Erfindung auch die Erkenntnis zugrunde, daß die visuelle Wahrnehmung maßgeblich auch durch die Orientierung bestimmt wird und umgekehrt auch der Gesichtssinn die Wahrnehmung von akustischen Informationen beeinflußt.

Beim üblichen Kinoerlebnis passen die angebotenen Bilder regelmäßig zu den das Bild mitbeschreibenden Geräuschen, abgesehen von Untermalungsgeräuschen wie beispielsweise Filmmusik, welche Einfluß auf die Stimmung des Films hat. Tritt in einem Film ein Geräusch auf, welches nicht zum dargebotenen Bildinhalt paßt, so schwenkt regelmäßig nach dem Geräusch sofort die Kamera auf die Quelle, von der das Geräusch stammen könnte, so daß der Betrachter eine visuelle Erklärung für das zuvor wahrgenommene Geräusch erhält.

Bei den vorgenannten Filmwiedergabeformen ist also der Betrachter maßgeblich an die Kameraführung gebunden und er weiß nicht, was sich außerhalb des von der Kamera aufgenommenen Ausschnitts tut.

Die Erfindung beschreibt eine neue interaktive Form der Filmwiedergabe und -wahrnehmung, bei der dem Betrachter und Wahrnehmenden ein Bild angeboten wird, welches größer ist als sein Gesichtsfeld. Das Gesichtsfeld des Menschen beträgt zwar theoretisch 180°, die eigentliche Wahrnehmung erfolgt jedoch in einem Gesichtsfeld, welches deutlich geringer ist als die theoretische Möglichkeit, z.B. 70°. Da der menschliche Körper und Kopf in der Lage ist, sein Gesichtsfeld auf jeden Punkt der Umgebung zu richten, ist dies nicht störend, sondern eher vorteilhaft, weil das menschliche Gehirn nur diejenigen visuellen Informationen vorarbeiten muß, welche im zentralen Gesichtsfeld liegen.

Ferner sieht die Erfindung vor, daß der Filmwahrnehmende mit einer Orientierungseinheit gekoppelt ist, welche die Blickrichtung des Wahrnehmenden erfaßt. Betrachtet der Wahrnehmende in einem mit panoramaartigen Szenen aufgebauten Film eine Einzelszene, so wird für diesen Betrachter die Audio- und/oder visuelle Wiedergabe dieser Szene über die andere Szene hervorgehoben. Eine solche Hervorhebung kann beispielsweise darin bestehen, daß die akustischen Informationen, die von der betrachteten Szene stammen, mit einer größeren Lautstärke oder Deutlichkeit wiedergegeben werden als die anderer Szenen, welche derzeit nicht betrachtet bzw, nicht sichtbar reproduziert werden. Die Hervorhebung einer einzelnen Szene kann auch darin bestehen, daß die betrachtete Szene auf dem Bildschirm größer dargestellt wird als die anderer Szenen oder daß beispielsweise die Auflösung und Darstellungsschärfe der betrachteten Szene besser ist als die anderer Szenen, in die der Betrachter derzeit nicht seinen Blick richtet. Insbesondere die Audioinformationen die von Szenen stammen, die außerhalb der Blickrichtung des Betrachters liegen, werden jedoch nicht vollständig unterdrückt, sondern können mehr oder weniger verständlich vom Betrachter wahrgenommen werden.

Durch die Erfindung wird eine realitätsnahe Filmwahrnehmung möglich. Die besondere Attraktivität der Erfindung besteht aber auch darin, daß eine völlig neue Art von Kino geschaffen wird, bei der nach dem ersten Ansehen des Kinofilms der Betrachter nur Teile des Gesamtfilms wahrgenommen haben kann, so daß möglicherweise das Urteil von zwei Besuchern über den Film völlig anders ausfällt, weil diese sich völlig unterschiedliche Filminhalte des gesamten Films angeschaut und wahrgenommen haben.

Die Erfindung läßt sich in besonders bevorzugter Weise in einem 3D-Projektionssystem einer Halb- oder Vollkugel wahrnehmen. In einer Halbkugel kann mittels eines 3D-Projektionssystems das von einem einzigen Kameraort aufgenommene Bild auf die Innenseite der Halbkugel abgebildet werden. Wenn mit der Kamera ein entsprechender Ausschnitt aus der Umgebungswelt aufgenommen worden ist - also nicht nur der übliche enge Kameraausschnitt, sondern alle Darstellungen, weiche vom Kameraort aus erfaßt werden können - werden dem Betrachter in einem einzigen Bild gleichzeitig viel mehr Szenen angeboten, wie er sie überhaupt nur theoretisch (sichtbar) wahrnehmen kann, weil das Gesichtsfeld des Betrachters deutlich geringer ist als die Wiedergabefläche. Diese Überforderung des Betrachters wird auch noch dadurch verstärkt, daß gleichzeitig mehrere verschiedene Szenen wiedergegeben werden, wobei der Betrachter regelmäßig es gewohnt ist, sich nur auf eine Szene zu konzentrieren und andere Szenen nicht vollständig erfassen und verstehen kann. Richtet der Betrachter seinen Blick auf eine bestimmte Szene, so erfährt dies die Wiedergabevorrichtung über die Blickrichtungs-Orientierungseinheit und dies hat zur Folge, daß die Audioinformationen, welche zur derzeitig betrachteten Szene gehören so wahrnehmbar sind, daß sie für den Betrachter einen Sinn machen. Gleichzeitig werden die Audioinformationen anderer Szenen nicht völlig ausgeblendet, sondern wie auch bei der realen Wahrnehmung etwas unterdrückt, so daß der Betrachter zwar noch merkt, daß sich auch anderswo noch irgendetwas im Film tut, er aber nicht die nicht betrachtete Filmszene vollständig wahrnehmen können.

Für eine akustisch realitätsnahe Wahrnehmung eignet sich zu den bekannten Schallwiedergabevorrichtungen wie Kopfhörer und Lautsprecher auch eine Schallwiedergabevorrichtung, wie sie aus WO97/41709 bekannt ist. Diese Schallwiedergabevorrichtung ist besonders deshalb vorteilhaft, weil bei ihr die Körperschallfunktionen mit in die Hörwahrnehmung einbezogen werden und im Gegensatz zu einem Lautsprechersystem auch mehrere Benutzer gleichzeitig in einem Raum eine unterschiedliche Hörerwahrnehmung erfahren können, wobei es hierbei nicht zu gegenseitigen Störungen kommt, wenn beispielsweise benachbarte Betrachter auf unterschiedliche Filmszenen blicken. Weitere Vorteile der Erfindung werden aus der nachfolgenden, beispielhaften Figurenbeschreibung ersichtlich.
- Fig. 1: Aufblick auf ein Szenenbeispiel;
- Fig. 2: planare Darstellung der Szene 1;
- Fig. 3: alternative Szenendarstellung zu Fig. 1;
- Fig. 4: Querschnitt durch ein erfindungsgemäßes Kino;
- Fig. 5: Aufsicht auf eine Wiedergabe eines erfindungsgemäßen Films;
- Fig. 6: Obenaufsicht auf eine erfindungsgemäße Kinoanordnung.

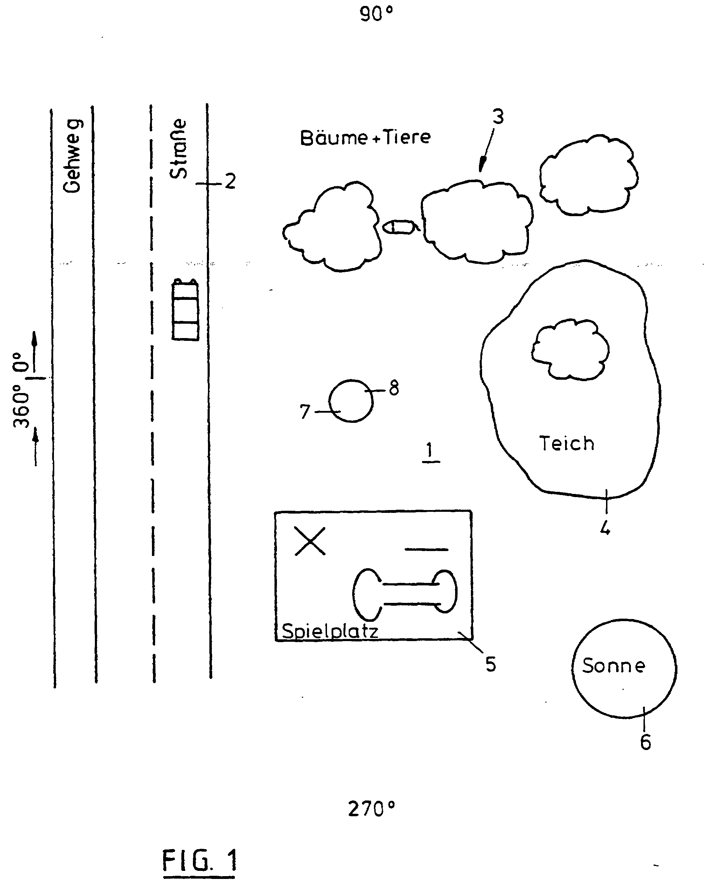

Figur 1 zeigt von oben in der Aufsicht eine aufgebaute Panorama-Filmkulisse 1, bei der die gesamte Szene sich aus mehreren Szenenabschnitten zusammensetzt. Der erste Szenenabschnitt 2 ist eine Straße, auf der ein Auto fährt. Der zweite Szenenabschnitt 3 ist eine kleine Baumgruppe (parkähnliche Anlage), in der ein Hund läuft und bellt. Der dritte Szenenausschnitt 4 ist ein kleiner Teich, auf dem sich Enten befinden und quakend nach Futter suchen. Der vierte Szenenabschnitt 5 ist ein Kinderspielplatz, auf dem mehrere Kinder sich lautstark an den Spielgeräten austoben. Darüber hinaus wird die gesamte Kulisse von der natürlichen Sonne am Standort 6 angeleuchtet. Hiermit gelten für alle Szenenausschnitte die exakt gleichen Lichtverhältnisse und der gleiche Sonnenlichteinfallswinkel. Alle Filmszenen zusammen werden von einer Kamera 7 am Kamerastandort 8 aufgenommen. Die Kameraeinrichtung 7 nimmt die gesamte Filmkulisse auf, d.h. max. ein 360° Rundum-Bild. Zusätzlich zur optischen Aufnahme werden auch die jeweiligen zu einer Szene gehörigen Geräusche aufgenommen, wobei die Aufnahme derart erfolgt, daß einer optischen Szene auch das zugehörige Geräusch bei der Aufnahme zugeordnet wird.

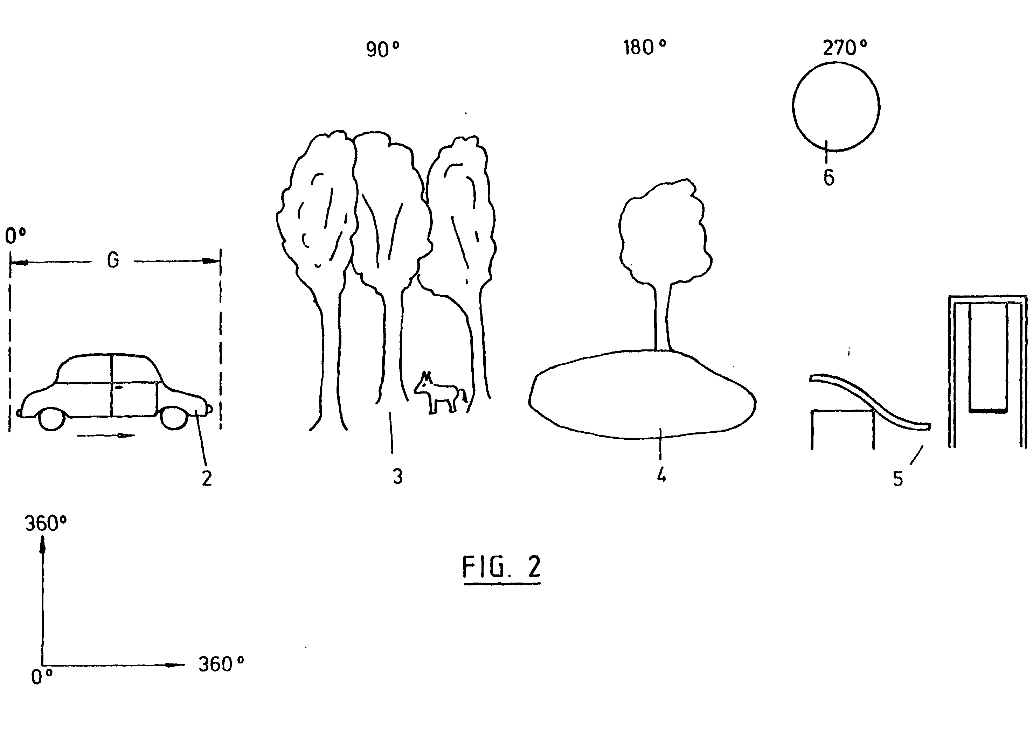

Figur 2 zeigt die Wiedergabe der in Fig. 1 dargestellten Szene im planaren Aufriß von 0 bis 360° (gilt sowohl für die Horizontale als auch Vertikale). Im linken Wiedergabeteil befindet sich die Autoszene 1, rechts daneben die Baumgruppenszene 2, rechts daneben wiederum die Teichszene 4 und am rechten Rand der Wiedergabe-Leinwand die Spielplatzszene 5. Ferner ist in die planare Wiedergabe Abschnitt G eingezeichnet, welcher den Bereich kennzeichnet, welcher üblicherweise nur mit dem menschlichen Auge scharf wahrgenommen werden kann (Gesichtsfeld). Es versteht sich von selbst, daß sich dieser Abschnitt G jeweils dahin verschiebt, wohin die Wahrnehmende seine Augen richtet. Richtet der Wahrnehmende seine Augen auf die Autoszene, so hört er deutlich das Geräusch des vorbeifahrenden Autos, nimmt aber möglicherweise gleichzeitig auch diejenigen Geräusche wahr, welche von den anderen Szenen stammen. Die Geräusche der anderen Szene werden jedoch weniger laut bzw. weniger deutlich wiedergegeben, so daß der Betrachter ein Filmerlebnis hat, welches der realen Wahrnehmung möglichst nahekommt. Auch eine Person, welche sich am Standort 8 der Kamera 7 befinden würde und ihre Augen auf die Straße richtet, würde nämlich die Geräusche der anderen Szenenabschnitte wahrnehmen, ohne diese optisch scharf wahrnehmen zu können. Dieses Erlebnis ist auch mit der erfindungsgemäßen Wiedergabe, wie sie in Fig. 2 dargestellt ist, möglich.

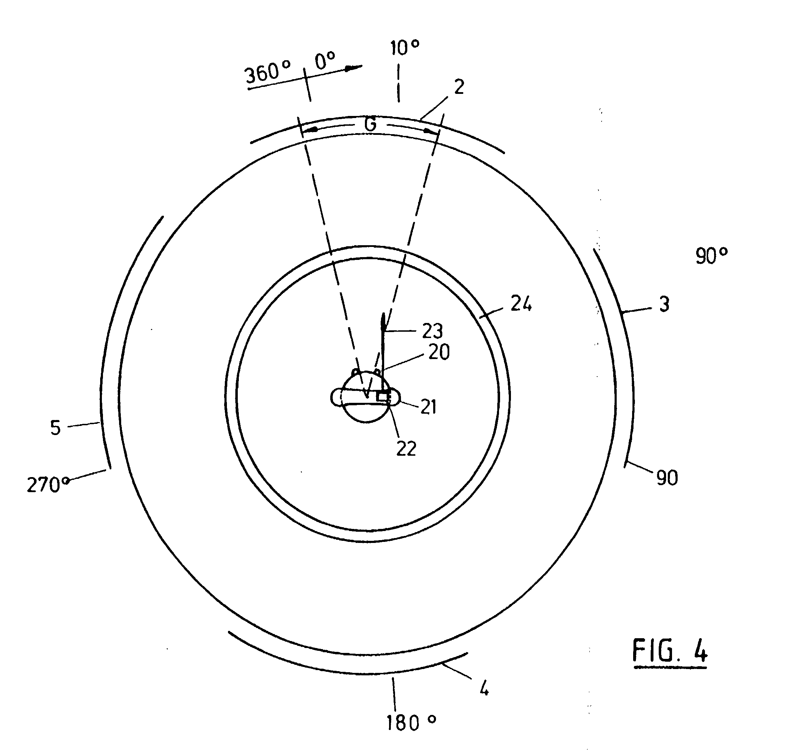

Figur 4 zeigt die Aufsicht auf eine geschlossene Kreisfläche einer Halbkugel im Querschnitt, welche die Kinoleinwand bildet. Im Zentrum des Kinos befindet sich der Betrachter, welcher seine Augen auf die Filmszene 2 - Straße mit vorbeifahrendem Auto - richtet. Der Betrachter trägt Kopfhörer oder eine am Kopf des Betrachters lagerbare Schallwiedergabevorrichtung, wie sie z.B. in Wo 97/41709 offenbart ist. Darüber hinaus ist an dem Kopfhörer bzw. der Schallwiedergabevorrichtung oder an einer anderen Stelle am Kopf des Betrachters ein Signalgeber, z.B. ein Magnetfelderzeuger oder eine Einrichtung zur Erzeugung einer elektromagnetischen Welle, beispielsweise einer (Infrarot-)Licht/Laserquelle angeordnet. Mittels des Signalgebers wird ein eindeutig gerichtetes Signal 23 ausgegeben, z.B. ein gerichtetes Magnetfeld oder ein gerichteter Lichtstrahl, wobei die Richtung des Signals der Kopfausrichtung/Betrachtungsrichtung des Kinobesuchers (Wahrnehmenden) entspricht. Dies kann dadurch erreicht werden, indem der Signalgeber in einer eindeutigen Weise am Kopf des Benutzers oder am Kopfhörer (befestigt) anliegt.

Ferner ist eine Signalempfangseinrichtung 24 vorgesehen, welche das Signal 23 bzw. die Richtung des Signals detektieren kann. Ist der Signalgeber ein Magnetfelderzeuger, so ist die Empfangseinrichtung in der Lage, die Richtung des Magnetfelds des Magneterzeugers festzustellen. Ist der Signalgeber eine Infrarot-Laser-Lichtquelle, so kann die Empfangseinrichtung eine entsprechende Kameraeinrichtung sein, mittels der die Richtung der Laser-Lichtquelle (bei Infrarot ist diese für den Menschen unsichtbar) empfangen kann. Es ist möglich, daß die Empfangseinrichtung beweglich ist, gleichfalls ist es aber auch möglich, daß die Empfangseinrichtung an einem festen Ort des Kinos für den Besucher unsichtbar angeordnet ist.

Mittels der Empfangseinrichtung 24 wird die Richtung des Signals z.B. 10° des Signalgebers festgestellt und abgeleitet von dem festgestellten Ergebnis wird die Wiedergabe in der oben beschriebenen Weise beeinflußt, indem beispielsweise die zur betrachteten Autoszene 2 gehörigen Geräusche lauter wiedergegeben werden als die Geräusche der anderen - vom Betrachter nicht wahrzunehmenden - Szenen.

Die Empfangseinrichtung kann auch in der Lage sein, nicht nur die Richtung des ausgegebenen Signals des Signalgebers festzustellen, sondern auch den genauen Ort der Betrachtung zu lokalisieren. Liegt dieser Betrachtungsort nicht im Vordergrund der Filmszene, sondern eher im Hintergrund, so wird gleichfalls auch der Hintergrund so weit wie möglich scharf kontrastiert und/oder vergrößert (PAN/-Zoom) wiedergegeben, so daß der Betrachter nicht nur ein zweidimensionales, sondern ein real dreidimensionales Bild wahrnehmen kann.

Wenn beispielsweise in der Autoszene hinter der Straße auf dem Gehweg (Fig. 1) eine Mutter mit ihrem Kind geht und der Betrachter seinen Blick auf diesen Unterabschnitt der Szene richtet, so kann er auch wahrnehmen, was die Mutter zu dem Kind sagt bzw. kann er auch die Person und deren Kleidung genau und möglichst scharf kontrastiert erkennen.

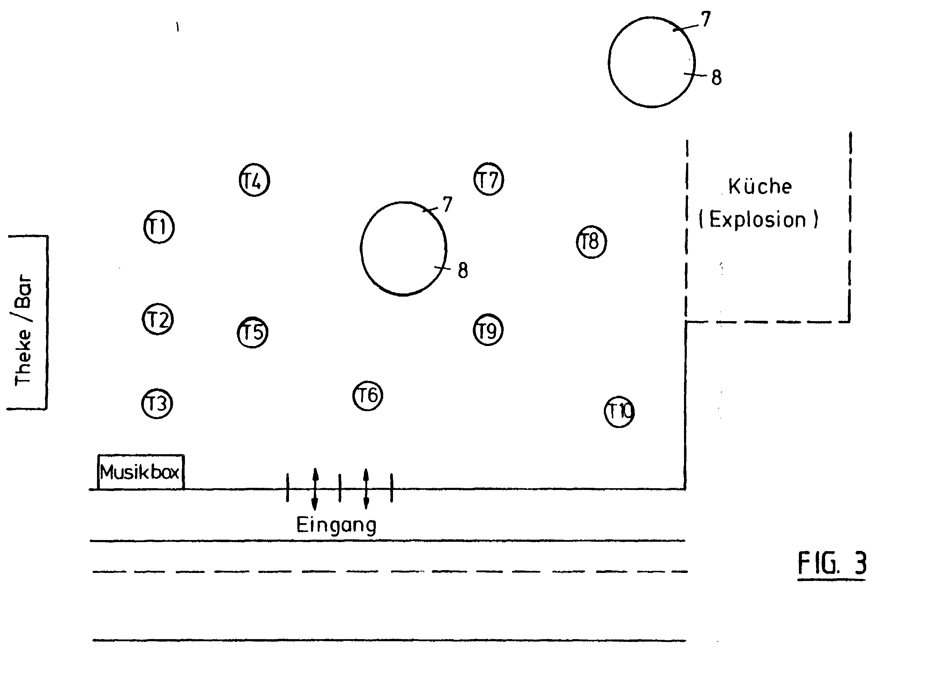

Figur 3 zeigt eine andere als in Fig. 1 dargestellte Szene im Aufblick. Die in Fig. 4 dargestellte Szene ist ein Restaurant mit vielen Tischen, einem Restaurant-Eingang, einer Theke (Bar), einer Kleinkunstbühne sowie einer angrenzenden Küche. Der Kamerastandort ist wiederum mit Position 8 bezeichnet, und die Kamera 7 nimmt die gesamte Szene rundum auf. Am Tisch T1 sitzt ein Liebespaar, am Tisch T2 sitzen drei Freunde, am Tisch T3 sitzt ein Unternehmensvorstand, am Tisch T4 sitzen vier Kegelfreundinnen, am Tisch T5 eine Familie mit einem Kind, am Tisch T6 ein Stammtisch einer Studentenverbindung, am Tisch T7 ein Anwalt mit seinem Klienten, am Tisch T8 wird ein Kindergeburtstag gefeiert, am Tisch T9 planen drei Kriminelle einen Bankraub und am letzten Tisch T10 findet sich eine Politikerrunde wieder. Der Barmixer an der Theke stellt die georderten Getränke zusammen, und einzelne Personen verlassen den Raum bzw. betreten ihn durch die Eingangstür, von der auch die Straßengeräusche zu vernehmen sind. Von der Tischzusammensetzung her ist es natürlich, wenn an jedem einzelnen Tisch andere Themen Gegenstand der Gespräche sind. Wenn nach mehreren Minuten dieser Aufnahme noch in der Küche eine Explosion erfolgt, werden sicherlich alle Restaurantbesucher ihren Blick in Richtung Küche werfen, möglicherweise werden jedoch alle einzelnen Betrachter die Explosion auf eine andere Art und Weise wahrnehmen bzw. verarbeiten. Die Kamera erfaßt sämtliche Gespräche und Reaktionen aller Tische gleichzeitig und man mag sich vorstellen, daß es bei der Wiedergabe dieses von der Kamera aufgenommenen Panoramafilms es mehrerer Filmstudien bedarf, um alle Szenen zu sehen und inhaltlich zu verarbeiten.

Bei der Filmaufnahme der Szene sind die jeweiligen optischen Eindrücke eines einzelnen Tisches zu den jeweiligen akustischen Informationen dieses Tisches zugeordnet, so daß bei der Wiedergabe eine entsprechende Verstärkung der Audio-Informationen über die Wiedergabe anderer akustischer Informationen von anderen Tischen möglich ist. Es ist auch möglich, daß jeder optischen bzw. akustischen Information von vornherein eine Richtungsinformation (z.B. in Grad) zugeordnet wird, welche bei der Wiedergabe dazu dient, die gewünschte Hervorhebung einer audio-visuellen Hervorhebung eines Szenenabschnitts über andere Szenenabschnitte durchzuführen.

Da jeder einzelne Tisch quasi einen einzelnen Film darstellt, ist es durchaus möglich, daß der Betrachter zum Erleben des gesamten Films wenigstens zehnmal den gleichen Film sehen muß, sich aber hierbei jeweils auf andere Tische konzentriert. Hierbei ist es besonders spannend, zu sehen, wie diese unterschiedlichen Tische die Explosion in der Küche wahrnehmen, was interessante Charakterstudien ermöglicht.

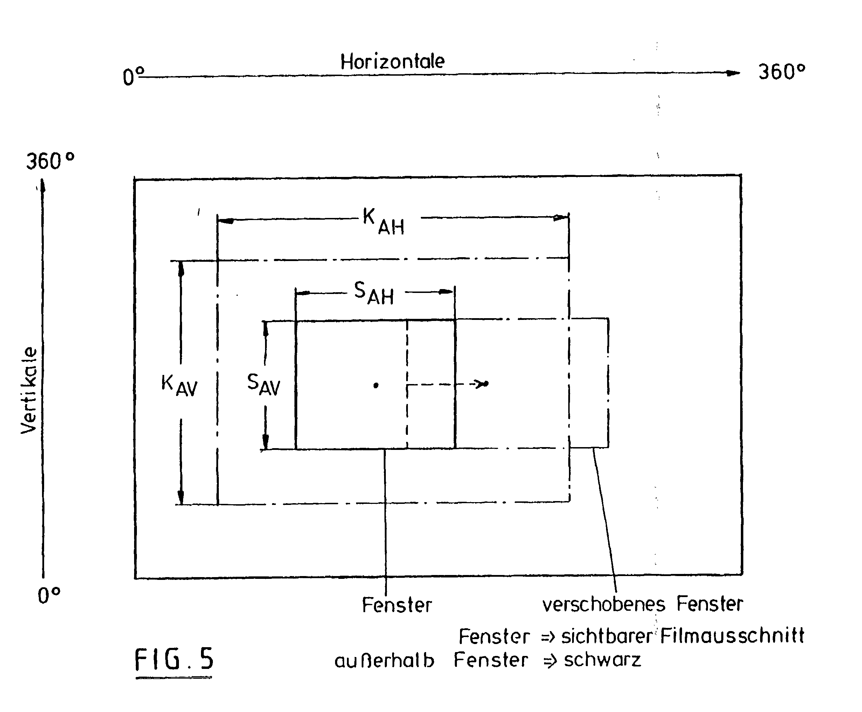

Figur 5 zeigt einen planaren Aufriß einer Leinwand mit einem als rechteckiges Fenster dargestellten sichtbaren Ausschnitt des Films. Im Zentrum des Fensters ist ein Lichtpunkt, welcher von einem Laser (Laserpointer) herrührt, welcher am Kopf des Benutzers so angebracht ist, daß die Richtung des Lasers in etwa übereinstimmt mit der Blickrichtung. Der sichtbare Filmausschnitt SA (SA_{H}, SA_{V}) wird durch einen Projektor erzeugt und mit dem Projektor ist mechanisch und/oder elektronisch gekoppelt eine Kamera zur Erfassung des Lichtpunkts. Ändert der Betrachter die Blickrichtung, ändert sich auch die Position des Lichtpunkts (Lichtflecks) und die Kamera folgt dem Lichtpunkt und sorgt dann durch Steuerung des Projektors dafür, daß das sichtbare Ausschnittsfenster des Films in Richtung des Lichtflecks verschoben wird, bis bevorzugterweise der Lichtpunkt wieder innerhalb des sichtbaren Filmausschnitts liegt. Bei dieser Verschiebung des Lichtausschnitts ändert sich auch der Filminhalt, welcher sich stets nach dem Inhalt richtet, welcher an der Ausschnittsposition wiederzugeben ist.

Allgemein gibt es mehrere Konzepte, wie der sichtbare Ausschnitt (das sichtbare Fenster) des Films bewegt werden kann. Beispielsweise kann die Filmprojektionseinrichtung so lange nachgeführt werden, bis der Lichtfleck zentral in der Fenstermitte liegt bzw. innerhalb eines bestimmten Zentralbereich des Fensters liegt (um eine ständige Fensterbewegung zu vermeiden). Auch ist es möglich, das Fenster so zu verschieben, bis es einen bestimmten Abstand zum Lichtfleck hin angenähert liegt. Ferner kann es vorteilhaft sein, keine Fensterbewegung vorzusehen, wenn der Lichtfleck außerhalb des Kameraausschnitts KA liegt. Alternativ hierzu kann jedoch eine Fensterbewegung in die Richtung vorgesehen werden, in der der Lichtfleck den Kameraausschnitt KA verlassen hat.

Vorteilhafterweise ist der Kameraausschnitt KA, also der horizontale und der vertikale Kameraausschnitt KA_{H} und KA_{V} größer als der Fensterausschnitt, so daß die Kamera dem Lichtfleck auch dann folgen kann, wenn dieser bereits außerhalb des Fensterausschnitts SA liegt.

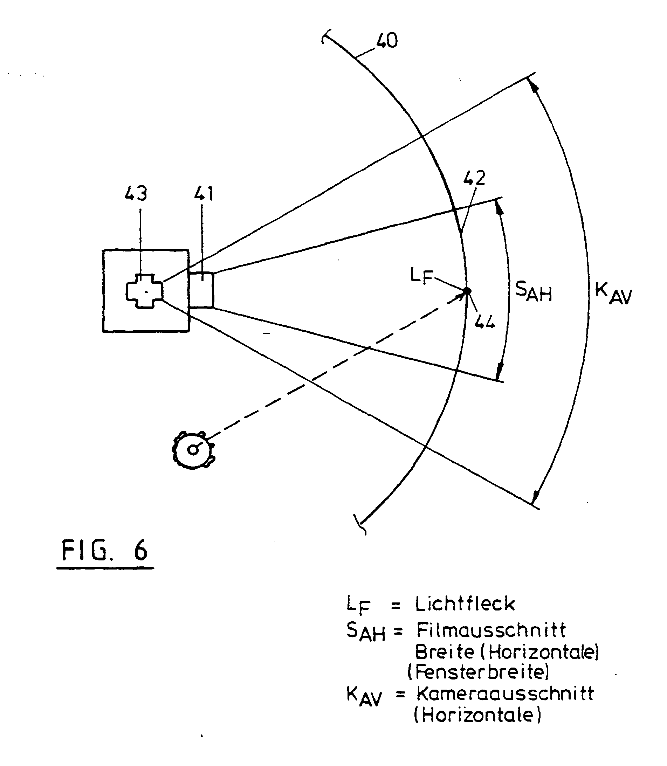

Figur 6 zeigt von oben eine Kinoanordnung, bei der die Kinoleinwand im Querschnitt aus einem Voll- oder Teilkreis 40 besteht. An einer zentralen Position im Kino ist ein Projektor 41 angeordnet, welcher das zu betrachtende Ausschnittsfenster 42 des Kinofilms an die Leinwand 40 wirft. Die Breite des sichtbaren Filmausschnitts (Fensterbreite) ist mit SA_{H} gekennzeichnet. Ferner befindet sich ober- oder unterhalb des Projektors oder an einer Stelle im Kino eine Kamera 43, welche einen relativ großen Kameraausschnitt KA_{V} aufnimmt, wobei innerhalb des Kameraausschnitts auch der sichtbare Filmausschnitt liegt. Wenn der Filmbetrachter, welcher einen optischen Signalgeber trägt (siehe Beschreibung zu Figur 4), auf den betrachteten Filmausschnitt 42 schaut, so wird zentral in der Mitte des Filmausschnitts ein Lichtfleck 44 erscheinen und dieser Lichtfleck wird von der Kamera 43 erfaßt und die Kamera 43 versucht, allen Bewegungen des Lichtflecks weitestgehend zu folgen. Die Kamera 43 steuert auch den auf einer bewegbaren Plattform angeordneten Projektor 41, so daß bei Verschiebung des Lichtflecks auch der sichtbare Filmausschnitt verschoben wird, so daß sich hierbei auch gleichzeitig der szenische Filminhalt ändert. Der Betrachter ist also auch gleichzeitig Kameramann und Regisseur des Films.

## Patentansprüche

1. Verfahren zur interaktiven audio/visuellen Wiedergabe eines mehrszenischen Films auf einer Projektionsfläche (40), wobei eine Breite und/oder Höhe des Films größer ist als ein bei der Filmwiedergabe sichtbarer Filmausschnitt (SA) und wobei vom Filmbetrachter die Position des sichtbaren Filmausschnitts (SA) auf der Projektionsfläche (40) innerhalb der Abmessungen des Gesamtfilms verschoben wird und bei der Audiowiedergabe des Films auch solche Audio-Informationen wiedergegeben werden, die nicht zum sichtbaren Filmausschnitt (SA) gehören.

2. Verfahren nach Anspruch 1, **dadurch gekennzeichnet, daß** die Wiedergabe der Audioinformationen, die zu dem sichtbaren Filmausschnitt gehören, über die Wiedergabe anderer Audioinformationen hervorgehoben wird, beispielsweise mehr verstärkt wird.

3. Verfahren nach einem der vorhergehenden Ansprüche, **dadurch gekennzeichnet, daß** die Position des Wiedergabeausschnitts des Films von der Blickrichtung des Betrachters abhängt.

4. Verfahren zur interaktiven Filwiedergabe eines Panoramafilms nach einem der vorhergehenden Ansprüche, dessen Breite und/oder Höhe (0° - 360°) größer ist als der übliche visuelle Betrachtungsausschnitt (ca. 70°) des menschlichen Auges (20) und bei der mittels einer Orientierungseinheit (23. 24) ermittelt wird, welcher Abschnitt (G) des Films von Wahrnehmenden aktuell betrachtet wird und die Wiedergabe des betrachteten Filmabschnitts audio und visuell über die Wiedergabe anderer, vom Wahrnehmenden aktuell nicht betrachteter Filmabschnitte hervorgehoben wird.

5. Verfahren nach Anspruch 4, **dadurch gekennzeichnet, daß** die visuelle Hervorhebung durch ein Wiedergabefenster/-ausschnitt realisiert wird und daß die Filmabschnitte außerhalb des Fensters nicht oder kaum sichtbar wiedergegeben werden.

6. Verfahren nach Anspruch 5, **dadurch gekennzeichnet, daß** die Form des Wiedergabeausschnitts als Fenster rechteckig, rund oder mit einer anderen beliebigen Form ausgebildet ist.

7. Verfahren nach einem der vorhergehenden Ansprüche, bei dem der Film auf einer Leinwand wiedergegeben wird, welche den Betrachter bis zu 360° in der Vertikalen als auch Horizontalen umgibt.

8. Verfahren nach einem der Ansprüche 4 bis 7, **dadurch gekennzeichnet, daß** einzelne Szenen (2, 3, 4, 5) des Panoramafilms von einem einzigen Kamerastandort (7) aufgenommen sind und die Filmaufnahmeeinrichtung (8) in der Lage ist, einen Bereich bis zu 360° um den Kamerastandort herum aufzunehmen.

9. Verfahren nach einem der Ansprüche 4 bis 8, **dadurch gekennzeichnet, daß** die Orientierungseinheit (23, 24) aus zwei Einrichtungen besteht, von denen die erste (23) ein Signal ausgibt und die zweite (24) das ausgegebene Signal empfängt und dahingehend bewertet, in welche Richtung das erste Signal gerichtet ist und das ermittelte Richtungssignal dazu verwendet wird, die Hervorhebung der Wiedergabe des betrachteten Panoramaabschnitts zu steuern.

10. Verfahren nach einem der Ansprüche 4 bis 9, **dadurch gekennzeichnet, daß** die Orientierungseinheit (23, 24) am Kopf und/oder einer vom Wahmehmenden getragenen akustischen Wiedergabevorrichtung (21), z.B. einem Kopfhörer, angebracht ist.

11. Verfahren nach einem der Ansprüche 4 bis 10, **dadurch gekennzeichnet, daß** die Orientierungseinheit (23, 24) aus einem Magnetfeldgeber und einer Magnetfeldmeßeinrichtung besteht und die Magnetfeldmeßeinrichtung ermittelt, wie das vom Magnetfeldrichtungsgeber erzeugte Magnetfeld ausgerichtet ist.

12. Verfahren nach einem der Ansprüche 4 bis 11, **dadurch gekennzeichnet, daß** die Orientierungseinheit (23, 24) eine Einrichtung zum Erzeugen einer elektromagnetischen Welle bzw. Lichtwelle, insbesondere im unsichtbaren Bereich, z.B. Infrarot, aufweist und ferner Mittel zum Empfang der erzeugten elektromagnetischen Welle bzw. Lichtwelle und zur Bewertung der Strahlungsrichtung der elektromagnetischen Welle bzw. Lichtwelle.

13. Verfahren nach Anspruch 11, **dadurch gekennzeichnet, daß** die Einrichtung zur Erzeugung einer elektromagnetischen Welle ein Infrarot-Laser ist und das Mittel zum Aufnehmen der elektromagnetischen Welle aus einer Kamera besteht, welche in der Lage ist, den auf die Leinwand auftreffenden Infrarotlichtpunkt zu detektieren und diesem bei Veränderung seiner Richtung zu folgen.

14. Verfahren nach einem der Ansprüche 4 bis 13, **dadurch gekennzeichnet, daß** bei der Betrachtung des Panoramafilms durch mehrere Personen jede Person mit einer eigenen Orientierungseinheit versehen ist.

15. Verfahren nach einem der Ansprüche 4 bis 14, **dadurch gekennzeichnet, daß** die Hervorhebungen der Wiedergabe des betrachteten Panoramaabschnitts dadurch erzielt werden, daß akustische Informationen, welche zum betrachteten Panoramaabschnitt gehören, bei der Wiedergabe mehr verstärkt werden als akustische Informationen, welche nicht zum betrachteten Panoramaabschnitt gehören.

16. Verfahren nach einem der Ansprüche 4 bis 15, **dadurch gekennzeichnet, daß** eine visuelle Hervorhebung der Wiedergabe des betrachteten Panoramaabschnitts dadurch erzielt wird, daß der betrachtete Panoramaabschnitt auf der Leinwand mit höchstmöglicher Schärfe wiedergegeben wird.

17. Verfahren nach einem der Ansprüche 4 bis 16, **dadurch gekennzeichnet, daß** für die Wiedergabe des Films ein Projektor vorgesehen ist, welcher mit einem Teil der Orientierungseinheit zur Feststellung der Blickrichtung mechanisch und/oder elektronisch gekoppelt ist und/oder von diesem gesteuert wird.

18. Verfahren nach einem der Ansprüche 4 bis 17, **dadurch gekennzeichnet, daß** die vom Benutzer getragene Einrichtung zur Ausgabe eines Signals einen Lichtstrahl emittiert und daß die Aufnahme/Kameraeinheit der Orientierungseinheit den emittierten Lichtstrahl oder eine Reflexion hiervon erfaßt und den Projektor so steuert, daß der Lichtstrahl bzw. ein Lichtpunkt des Lichtstrahls auf den wiedergegebenen Filmausschnitt zentriert wird.

19. Verfahren nach einem der vorhergehenden Ansprüche, **dadurch gekennzeichnet, daß** die Position des sichtbaren Ausschnitts bei mehreren Lichtpunkten/Lichtstrahlen, emittiert von verschiedenen Positionen der Benutzer durch Superposition der jeweiligen einzelnen Lichtpunkte/Lichtstrahlen bestimmt wird.

20. Verfahren ach einem der Ansprüche 4 bis 19, **dadurch gekennzeichnet, daß** mehrere Orientierungseinheiten vorgesehen ist, mittels denen eine Mehrheitsentscheidung über den sichtbaren Ausschnitt herbeigeführt wird, indem das geometrische Mittel aller von den Orientierungseinheiten bestimmten Richtungen bestimmt wird.

21. Verfahren nach einem der vorhergehenden Ansprüchen, **dadurch gekennzeichnet, daß** die Form und/oder Größe des sichtbaren Filmausschnitts individuell einstellbar ist.

22. Verfahren nach einem der vorhergehenden Ansprüche, **dadurch gekennzeichnet, daß** die Steuerung des sichtbaren Filmausschnitts durch einen Computer erfolgt.

23. Film-Wiedergabeeinheit angepaßt zur Durchführung des Verfahrens nach einem der vorhergehenden Ansprüche zur Wiedergabe eines Panorama-Films, dessen Filmbreite größer ist als der übliche visuelle Betrachtungsausschnitt (ca. 70°) des menschlichen Auges, bei dem dem Wahrnehmenden (Betrachter) des Films eine Orientierungseinheit zugeordnet ist, welche eine Information ermittelt, welchen Filmpanoramaabschnitt der Wahmehmende aktuell betrachtet und die Filmwiedergabeeinheit Mittel aufweist, welche von der Orientierungseinheit derart steuerbar sind, daß die Wiedergabe des betrachteten Filmpanoramaabschnitts audio und visuell über die Wiedergabe anderer Filmpanoramaabschnitte hervorhebbar ist.

## Claims

1. Method for interactive audio/visual replay of a film, comprising several scenes, on a projection surface (40), wherein a width and/or height of the film is larger than a section of the film (SA) which is visible during film replay, and wherein the viewer shifts the position of the visible film section (SA) on the projection surface (40) within the dimensions of the overall film, and wherein audio information which is not associated with the visible film section (SA) is also included in the audio replay of the film.

2. Method according to claim 1, **characterized in that** the replay of the audio information which belongs to the displayed film section is emphasized, e.g. is more amplified, over replay of other audio information.

3. Method according to any one of the preceding claims, **characterized in that** the position of the replayed section of the film depends on the observation direction of the viewer.

4. Method for interactive film replay of a panoramic film in accordance with one of the preceding claims, the film having a width and/or height (0° - 360°) which is larger than the normal visual viewed section of the human eye (20) (approximately 70°C), wherein an orientation unit (23, 24) determines which section (G) of the film is currently viewed by the viewer and the audio and visual replay of the viewed film section is emphasized over replay of other film sections which are momentarily not viewed by the viewer.

5. Method according to claim 4, **characterized in that** the visual emphasis is realized through a replay window / section and the film sections are not replayed outside of the window or only such that they are hardly visible.

6. Method according to claim 5, **characterized in that** the shape of the replayed section is designed as a window of rectangular, round or any other shape.

7. Method according to any one of the preceding claims, wherein the film is replayed on a screen which surrounds the viewer up to 360° in vertical and also horizontal directions.

8. Method according to any one of the claims 4 through 7, **characterized in that** individual scenes (2, 3, 4, 5) of the panoramic film are recorded from one single camera location (7), wherein the film recording means (8) can record a region of up to 360° about that camera location.

9. Method according to any one of the claims 4 through 8, **characterized in that** the orientation unit (23, 24) comprises two means, the first of which (23) emits a signal and the second (24) of which receives the emitted signal and evaluates it with regard to the direction of the first signal, wherein the determined directional signal is used to control the emphasis of the replay of the viewed panoramic section.

10. Method according to any one of the claims 4 through 9, **characterized in that** the orientation unit (23, 24) is mounted on the head and/or on an acoustic replay device (21) carried by the observer, e.g. headphones.

11. Method according to any one of the claims 4 through 10, **characterized in that** the orientation unit (23, 24) comprises a magnetic field transmitter and a magnetic field measuring means, wherein the magnetic field measuring means determines the orientation of the magnetic field generated by the magnetic field direction transmitter.

12. Method according to any one of the claims 4 through 11, **characterized in that** the orientation unit (23, 24) comprises means for generating an electromagnetic wave or light wave, in particular, in the invisible range, e.g. infrared, and also comprises means for receiving the generated electromagnetic wave or light wave, and for evaluation of the radiation direction of the electromagnetic wave or light wave.

13. Method according to claim 11, **characterized in that** the means for generating an electromagnetic wave is an infrared laser and the means for recording the electromagnetic wave comprises a camera which can detect the infrared light point which impinges on the screen, and follow any change in direction thereof.

14. Method according to any one of the claims 4 through 13, **characterized in that**, when several persons view the panoramic film, each person has his/her own orientation unit.

15. Method according to any one of the claims 4 through 14, **characterized in that** replay of the viewed panoramic section is emphasized **in that** acoustic information which belongs to the viewed panoramic section is more amplified during replay than acoustic information which does not belong to the viewed panoramic section.

16. Method according to any one of the claims 4 through 15, **characterized in that** visual emphasis of the replay of the viewed panoramic section is effected **in that** the viewed panoramic section is replayed on the screen with maximum sharpness.

17. Method according to any one of the claims 4 through 16, **characterized in that** a projector is provided for replaying the film which is mechanically and/or electronically coupled to part of the orientation unit to determine the direction of view and/or is controlled thereby.

18. Method according to any one of the claims 4 through 17, **characterized in that** the means carried by the user emits a light beam to trigger a signal, wherein the receiving/camera unit of the orientation unit detects the emitted light beam or a reflection thereof and controls the projector such that the light beam or a light point of the light beam is centered on the replayed film section.

19. Method according to any one of the preceding claims, **characterized in that** the position of the visible section associated with several light points/light beams emitted by different positions of the user is determined through superposition of the respective individual light points/light beams.

20. Method according to any one of the claims 4 through 19, **characterized in that** several orientation units are provided for producing a majority decision about the visible section by determining the geometric average of all directions determined by the orientation units.

21. Method according to any one of the preceding claims, **characterized in that** the shape and/or size of the visible film section can be individually adjusted.

22. Method according to any one of the preceding claims, **characterized in that** the visible film section is controlled by a computer.

23. Film replay unit which is adapted to carry out the method in accordance with one of the preceding claims for replaying a panoramic film whose film width is larger than the usual visual viewing range (approximately 70°) of the human eye, wherein the viewer (observer) of the film is associated with an orientation unit which detects information about which film panoramic section is momentarily viewed by the viewer, and the film replay unit comprises means which can be controlled by the orientation unit such that audio and visual replay of the observed film panoramic section can be emphasized over replay of other panoramic film sections.

## Revendications

1. Procédé de projection audio/visuelle interactive d'un film à scènes multiples sur une surface de projection (40), selon lequel une largeur et/ou hauteur du film est supérieure à une partie de film (SA) visible lors de la projection du film et dans lequel l'utilisateur déplace la position de la partie de film (SA) visible sur la surface de projection (40) dans la limite des dimensions du film entier et selon lequel, lors de la reproduction audio du film, on reproduit également des informations audio qui ne sont pas associées à la partie de film (SA) visible.

2. Procédé selon la revendication 1, **caractérisé en ce que** la reproduction des informations audio associées à la partie de film visible est mise en évidence par rapport à la reproduction d'autres informations audio, par exemple par un son plus fort.

3. Procédé selon l'une quelconque des revendications précédentes, **caractérisé en ce que** la position de la partie de projection du film dépend de la direction du regard du spectateur.

4. Procédé de projection de film interactive d'un film panoramique selon l'une quelconque des revendications précédentes, dont la largeur et/ou la hauteur (0° - 360°) est supérieure à la partie habituellement perçue visuellement (environ 70°) par l'oeil humain (20) et selon lequel on détermine à l'aide d'une unité d'orientation (23,24) la partie (G) du film qui est présentement regardée par des spectateurs et l'on met en évidence la reproduction audio et visuelle de la partie de film regardée par rapport à la reproduction d'autres parties de film présentement non regardées par l'utilisateur.

5. Procédé selon la revendication 4, **caractérisé en ce que** la mise en évidence visuelle est réalisée par une fenêtre, respectivement une découpe de projection et **en ce que** les parties de film situées en dehors de la fenêtre sont projetées de manière invisible ou à peine visible.

6. Procédé selon la revendication 5, **caractérisé en ce que** la partie projetée est conformée en fenêtre rectangulaire, ronde ou d'une autre forme quelconque.

7. Procédé selon l'une quelconque des revendications précédentes, dans lequel le film est projeté sur un écran entourant le spectateur jusqu'à 360° à la verticale et à l'horizontale.

8. Procédé selon l'une quelconque des revendications 4 à 7, **caractérisé en ce que** des scènes individuelles (2,3,4,5) du film panoramique sont enregistrées à partir d'un emplacement de caméra (7) unique et **en ce que** le dispositif de prise de vue (8) est capable d'enregistrer une zone s'étendant jusqu'à 360° autour de l'emplacement de la caméra.

9. Procédé selon l'une quelconque des revendications 4 à 8, **caractérisé en ce que** l'unité d'orientation (23,24) consiste en deux dispositifs, dont le premier (23) émet un signal et le deuxième (24) reçoit le signal émis et l'évalue pour connaître la direction dans laquelle est dirigé le premier signal, et **en ce que** le signal déterminé de direction est utilisé pour commander la mise en évidence de la projection de la partie panoramique regardée.

10. Procédé selon l'une quelconque des revendications 4 à 9, **caractérisé en ce que** l'unité d'orientation (23,24) est disposée au niveau de la tête et/ou d'un dispositif de reproduction (21) acoustique, par exemple un casque, porté par le spectateur.

11. Procédé selon l'une quelconque des revendications 4 à 10, **caractérisé en ce que** l'unité d'orientation (23,24) consiste en un capteur de champ magnétique et un dispositif de mesure de champ magnétique, et **en ce que** le dispositif de mesure de champ magnétique détermine l'orientation du champ magnétique créé par le dispositif de capteur de champ magnétique.

12. Procédé selon l'une quelconque des revendications 4 à 11, **caractérisé en ce que** l'unité d'orientation (23,24) présente un dispositif de génération d'une onde magnétique, par exemple une onde lumineuse, en particulier dans le domaine invisible, par exemple l'infrarouge, ainsi que des moyens de réception de l'onde électromagnétique générée ou de l'onde lumineuse et d'évaluation de la direction de rayonnement de l'onde électromagnétique ou lumineuse.

13. Procédé selon la revendication 11, **caractérisé en ce que** le dispositif de génération d'une onde électromagnétique est un laser à infrarouge et **en ce que** le moyen de capter l'onde électromagnétique consiste en une caméra capable de détecter le point de lumière infrarouge se manifestant sur l'écran et de le suivre lorsqu'il change de direction.

14. Procédé selon l'une quelconque des revendications 4 à 13, **caractérisé en ce que** lorsque plusieurs personnes regardent le film panoramique, chaque personne est munie de sa propre unité d'orientation.

15. Procédé selon l'une quelconque des revendications 4 à 14, **caractérisé en ce que** l'on obtient la mise en évidence de la reproduction de la partie panoramique regardée par l'amplification des informations acoustiques associées à la partie panoramique regardée lors de leur reproduction par rapport à des informations acoustiques qui ne sont pas associées à la partie panoramique regardée.

16. Procédé selon l'une quelconque des revendications 4 à 15, **caractérisé en ce que** l'on obtient une mise en évidence visuelle de la reproduction de la partie panoramique regardée en projetant la partie panoramique regardée sur l'écran avec la plus grande netteté possible.

17. Procédé selon l'une quelconque des revendications 4 à 16, **caractérisé en ce que** pour la projection du film, on prévoit, pour la détermination de la direction du regard, un projecteur couplé mécaniquement et/ou électroniquement à une partie de l'unité d'orientation et/ou commandée par celle-ci.

18. Procédé selon l'une quelconque des revendications 4 à 17, **caractérisé en ce que** le dispositif porté par l'utilisateur pour l'émission d'un signal émet un rayon lumineux et **en ce que** l'unité de prise de vue / caméra de l'unité d'orientation détecte le rayon lumineux émis ou un reflet de celui-ci et commande le projecteur de telle façon que le rayon lumineux ou le point lumineux du rayon lumineux est centré sur l'extrait de film projeté.

19. Procédé selon l'une quelconque des revendications précédentes, **caractérisé en ce que** la position de l'extrait visible, lorsqu'il existe plusieurs points/rayons lumineux émis à partir d'emplacements différents des utilisateurs, est déterminée par la superposition de chaque point/rayon lumineux individuel.

20. Procédé selon l'une quelconque des revendications 4 à 19, **caractérisé en ce que** l'on prévoit plusieurs unités d'orientation au moyen desquelles une décision majoritaire concernant l'extrait visible est obtenue par détermination de la moyenne géométrique de toutes les directions déterminées par l'unité d'orientation.

21. Procédé selon l'une quelconque des revendications précédentes, **caractérisé en ce que** la forme et/ou la dimension de l'extrait de film visible peut être réglée individuellement.

22. Procédé selon l'une quelconque des revendications précédentes, **caractérisé en ce que** la commande de l'extrait de film visible est effectuée par un ordinateur.

23. Unité de projection de film adaptée à l'application du procédé selon l'une quelconque des revendications précédentes pour la projection d'un film panoramique, dont la largeur de film est supérieure à la partie habituellement perçue visuellement (environ 70°) par l'oeil humain, dans lequel on associe au spectateur du film une unité d'orientation qui délivre une information concernant la partie du film panoramique présentement regardée par le spectateur et dans lequel l'unité de projection présenté des moyens pouvant être commandés par l'unité d'orientation de telle façon que la reproduction de la partie du film panoramique regardée peut être mise en évidence de manière audio et visuelle par rapport à la reproduction d'autres parties de film panoramique.
